# EUROPEAN PATENT SPECIFICATION

(11) **EP 3 140 182 B1**
(45) Date of publication and mention of the grant of the patent: **29.08.2018**
(21) Application number: 15717977.1
(22) Date of filing: 19.03.2015
(51) Int. Cl.: B62J 29/00

(54) **SYSTEM FOR ADJUSTING THE ANGLE OF POWERED TWO-WHEELER REAR VIEW MIRRORS IN RELATION TO THE RIDER'S HEAD POSITION**
SYSTEM ZUR WINKELEINSTELLUNG EINES MOTORISIERTEN ZWEIRAD-RÜCKSPIEGELS IN RELATION ZUR KOPFPOSITION DES FAHRERS
SYSTÈME POUR RÉGLER UN RÉTROVISEUR D'UN VÉHICULE À MOTEUR À DEUX ROUES EN RELATION DE LA POSITION DE LA TÊTE DU CONDUCTEUR

(30) Priority: 24.03.2014 PL 40765014
(43) Date of publication of application: 15.03.2017
(73) Proprietor: Smart Mirrors sp. z o.o., 60-282 Poznan (PL)
(72) Inventor: AMBROZKIEWICZ, Bartosz, 60282 Poznan (PL)
(74) Representative: Wroblewski, Michal
(86) International application number: PCT/PL2015/000044
(87) International publication number: WO 2015/147663

(56) References cited:
- DE-A1-102007 039 617
- DE-A1-102008 023 884
- DE-A1-102009 005 729
- DE-A1-102013 205 287
- JP-A- H0 263 990
- JP-A- H02 299 992
- TW-A- 200 942 440
- US-A- 4 746 206

## Description

The subject of the invention is a method for adjusting the angle of powered two - wheeler rear view mirrors in relation to the rider's head, used for continuous adjustment of the rear view motorcycle mirrors depending on the rider's body angle.

In currently available solutions, a motorcycle rider adjusted the rear view mirrors after sitting in the saddle, in relation to the positioning of his head in an upright seating position, using controls to operate the motors that move the X and Y axes of the rear view mirrors.

The riding technique and motorcycle speed requires the rider's upper body to incline forwards. This decreases aerodynamic resistance, increases speed and potentially reduces fuel consumption.

The adjustment of mirrors in an upright seating position results in a significant change of the angle of incidence and reflection of the mirrors, so that a rider in an inclined position is not able to view the field behind the motorcycle. This can lead to accidents, due to the inability to notice an overtaking vehicle. There is also no possibility of adjusting the mirrors while riding, due to safety considerations.

Adjustable mirror mounts are known from a priority art. Prior specification DE 10 2013 205287A1, on which the preamble of claim 1 is based, provides an automatically adjusting mirror system including a mirror assembly, a head position sensor configured and arranged to detect a pose of a head of a driver of a vehicle, and a master controller in communication with the mirror assembly and head position sensor. The master controller is configured to receive input from the mirror assembly and head position sensor, and adjust the mirror assembly based on the input from the mirror assembly and the input from the head position sensor to maintain a line of sight for the driver.

Japanese patent description JP H02 299992A shows a speedometer and a tachometer that are mounted on a meter mounting part 12 of an instrument unit 11 disposed to a mounting part 2a on the car body side rotated integrally with a handle 2, and an ultrasonic distance sensor 100 is mounted to the lower part of the instrument unit 11. The distance sensor 100 is mounted so that it is detected based on a distance between a helmet H and the ultrasonic distance sensor 100 whether the driving posture of a driver M is a forward inclining posture M1 or a standing - upright posture M2. When the forward inclination posture M1 is detected by the distance sensor 100 and it is detected by a car speed sensor that a bicycle is in a running state at a running speed higher than a set value, a motor 13 is run forward and the instrument unit 11 is rotated in an angle alpha arc in a counterclockwise direction through a gear mechanism 15 and brought into a position L.

Known from the patent description no. US4746206A is a motorcycle mirror mounting system that controls the position of the mirrors of a motorcycle during tilting and/or turning of the motorcycle. A tilt sensor detects the degree and direction of tilting of the motorcycle frame and provides data representative thereof to a central controller. In accordance with its adjustment determinations, the controller acts through one or more servo control circuits to continuously adjust the positions of the mirrors to maintain the mirrors in positions providing substantially the same view to the rear as during straight driving. Thus, an image that would normally appear near the center of a mirror during straight riding, and which would appear to move either to the left or right of, and toward either the upper or lower boundaries of, the mirror during tilting of the motorcycle, is maintained substantially at the center of the mirror. If the mirrors are mounted on the motorcycle handlebars, then a turn sensor senses the degree and direction of turning of the mirrors relative to the motorcycle frame and provides data representative thereof to the central controller which acts through the servo control circuits to adjust the mirror positions for the turning as well as the tilting.

Japanese patent description no. JP H02 63990A presents a system in which a rearview mirror 10 is supported by a ball shaft 34 fixed to the back, and engaged with a semicircular lengthwise lever 35a and a crosswise leer 36b supported free of rocking motor by fulcrum shafts 36a, 36b orthogonal with each other. These levers 35a, 35b are rocked each by motors 37a, 37b, and the rearview mirror 10 is tilted freely in the composed direction. These motors 37a, 37b are controlled by a control signal of a controller into which each detection signal of a tilt angle sensor detecting a tilt angle to the ground and a car speed sensor is inputted. Accordingly, these motors 27a, 27b are controlled by this detection signal, and according to this control, back sight of the rearview mirror 10 is properly adjusted.

The essence of the invention is a method for adjusting the angle of powered two-wheeler rear view mirrors in relation to the rider's head, by the processor acting on the mirrors' X and Y axes control motors, the essence of which consists of adjusting the X and Y axes location in a most upright position after seating, and this position being approved with a button, then the mirrors' X and Y axes location is adjusted with the most leaned forward position and approved with a button, the data being recorded by a processor, and then switching into automatic operation mode, where the processor receives data from the rider's head distance sensor, processes the data with the rider's inclination input data, and converts them to the mirrors' X and Y axes control motor control signals.

The use of the solution presented in the invention enables the following technical and utility effects:
- possibility of continuously adjusting the rear view mirrors X and Y axes depending on the inclination of the rider's body,
- improved safety by enabling continuous observation of the field behind the powered two-wheeler,
- eliminating the necessity of straightening the rider's body in order to view the field behind the powered two - wheeler, which will result in the change of the motorcycle's chassis centre of gravity and in discomfort to the rider,
- low installation costs,
- possible incorporation of solution elements into existing mirror control elements,
- ease of use.

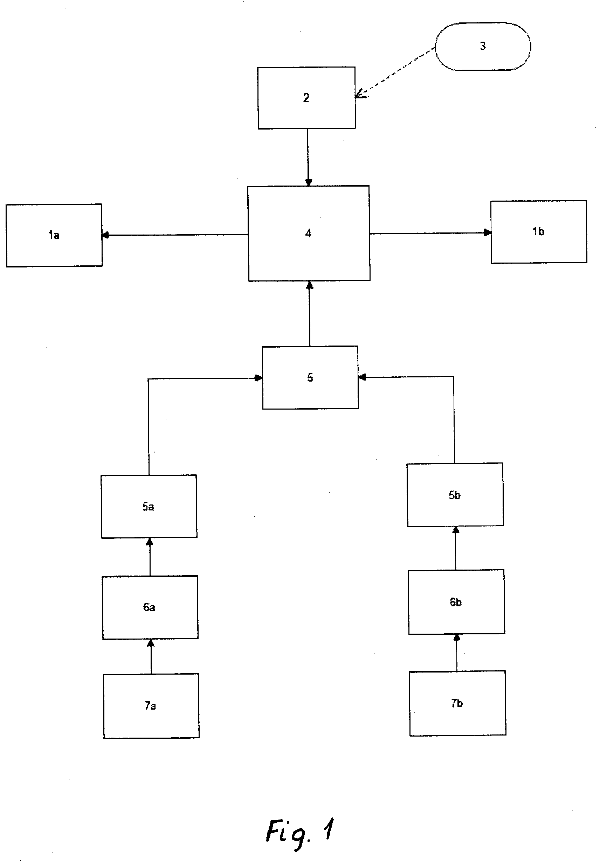

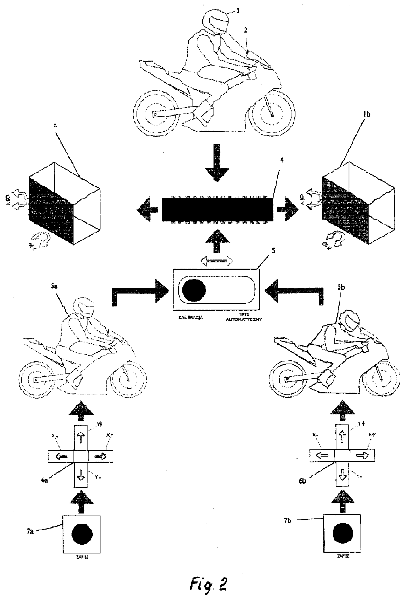

The subject of the invention, in an example, but not limiting, implementation was shown on a drawing, where fig. 1 presents a block diagram of the solution, whereas fig. 2 - a functional diagram.

A system for adjusting the angle of powered two-wheeler rear view mirrors in relation to the rider's head position, having mirrors' surface X and Y ax s control motors (not shown on the drawing) emplaced in the mirror housing la, 1b, as well as a motors control system. This system consists of a rider's 3 head distance sensor 2, advantageously located on the front fairing of the powered two-wheeler, connected to a processor 4. The processor is connected to the rider's 3 position calibrator at a maximum 5a and minimum 5b distance to the distance sensor 2 and manual mirrors' 1a, 1b X and Y axes placement controller 6a and 6b and with the mirrors' 1a, 1b X and Y axes control motors.

The processor has a converter for the calibrator 5 data and variable data from the distance sensor 2, converting into mirrors' 1a, 1b X and Y axes control motors control pulses.

This system is implemented in a unit for adjusting the angle 'of powered two-wheeler rear view mirrors in relation to the rider's head position in the form of X axis and Y axis adjustment motors located within the mirror 1a, 1b enclosure. The unit is composed of the manual controller 5a, 5b of the mirrors' 1a, 1b X and Y axes placement, connected through the calibrator 5 with the processor 4, the input of which is also connected with the rider's head distance sensor 2 and the output with the mirrors' la, lb X and Y axes control motors.

The unit is used to implement a method for adjusting the angle of powered two-wheeler rear view mirrors in relation to the rider's head. The position of the mirrors' la, lb X and Y axes is adjusted in an outmost upright position after seating using a manual controller 6a, 6b and this position is confirmed with a button 7a, 7b, the data being recorded by processor 5. The controller 6a, 6b is then used to adjust the mirrors' 1a, 1b X and Y axes location in the position for most leaned forward body and this position is approved with the button 7a, 7b. The data are recorded by the processor 4, then the system switches into automatic operation mode, where the processor 4 receives data from the rider's 3 head distance sensor 2, processes the data with the initial data of rider's 3 inclination, and converts them to the mirrors' 1a, 1b X and Y axes control motor control signals.

## Claims

1. A method for adjusting the angle of powered two-wheeler rear view mirrors in relation to the rider's head, by a processor acting on the mirrors' X and Y axes control motors, **characterized in that** the mirrors' (la, 1b) X and Y axes location is adjusted after the rider (3) sits down in a most upright position, and approved with a button (7a, 7b), then the mirrors' (1a, 1b) X and Y axes location is adjusted with the rider's (3) most leaned forward position and approved with the button (7a, 7b), after which the data is recorded by a processor (4), and then switching into automatic operation mode, where the processor (4) receives data from the rider's (3) head distance sensor (2), processes the data with the rider's (3) inclination input data, and converts them to the mirrors' (1a, 1b) X and Y axes control motor control signals.

## Patentansprüche

1. Verfahren zum Ändern des Winkels der Rückansichtsspiegel eines zweirädrigen Fahrzeugs gegenüber der Position des Kopfes des Fahrers durch Einwirkung mit einem Treiber auf die Motoren, die die X- und Y-Achsen der Spiegel steuern, **gekennzeichnet dadurch, dass** nachdem der Fahrer seinen Platz eingenommen hat, die Position der X und Y Achsen der 1a und 1b Spiegel bei einer vollständig aufrechten Position des Fahrers eingestellt wird und diese Einstellung mit den Tasten 7a, 7b bestätigt wird, und die Daten durch den Prozessor 4 registriert werden, und dass anschließend die Position der X und Y Achsen der 1a und 1b Spiegel bei einer maximal gebeugten Position des Fahrers eingestellt wird und diese Einstellung mit den Tasten 7a, 7b bestätigt wird, und danach diese Daten durch den Prozessor 4 registriert werden und anschließend in den Automatikmodus umgeschaltet wird, in dem der Prozessor 4 die Daten aus dem Entfernungssensor 2 des Fahrerkopfes 3 entnimmt, die Daten mit den Ausgangsdaten der Beugung des Fahrers 3 umrechnet und sie in das Steuersignal der Motoren umwandelt, die die X- und Y-Achsen der Spiegel steuern.

## Revendications

1. La méthode de modification de l'angle de la position des rétroviseurs des véhicules à deux roues par rapport à la position de la tête du conducteur, en agissant avec le contrôleur sur les moteurs de contrôle des axes X et Y des rétroviseurs, **caractérisée en ce qu'**après que le conducteur se soit assis dans la position maximalement verticale, la position des axes X et Y des rétroviseurs (1a,1b) est réglée et confirmée par un bouton (7a, 7b) et ces données sont enregistrées par le processeur (4), ensuite la position des axes X et Y des rétroviseurs (1a, 1b) est réglée, lorsque la position du conducteur est maximalement inclinée, et confirmée par un bouton (7a, 7b) et ensuite ces données sont enregistrées par le processeurs (4), puis en mode automatique, lorsque le processeur (4) reçoit des données du capteur de distance de tête (2) du conducteur, il traite les données avec les données initiales de l'inclinaison du conducteur (3) et les convertit en signal de commande des moteurs de contrôle des axes E et Y des rétroviseurs (1a, 1b).
